(19) Europäisches Patentamt
European Patent Office
Office européen des brevets

(11) **EP 3 274 086 B1**

(12) **EUROPÄISCHE PATENTSCHRIFT**

(45) Veröffentlichungstag und Bekanntmachung des Hinweises auf die Patenterteilung:
**30.01.2019  Patentblatt 2019/05**

(21) Anmeldenummer: **16713761.1**

(22) Anmeldetag: **16.03.2016**

(51) Int Cl.:
*B01J 23/22* [(2006.01)]     *B01J 27/055* [(2006.01)]
*B01J 35/02* [(2006.01)]     *B01J 37/00* [(2006.01)]
*C01B 17/79* [(2006.01)]     *B01D 53/86* [(2006.01)]
*B01J 35/00* [(2006.01)]     *B01J 35/10* [(2006.01)]

(86) Internationale Anmeldenummer:
**PCT/EP2016/055670**

(87) Internationale Veröffentlichungsnummer:
**WO 2016/156042 (06.10.2016 Gazette 2016/40)**

(54) **KATALYSATORFORMKÖRPER FÜR DIE KATALYTISCHE OXIDATION VON SO2 ZU SO3**

SHAPED CATALYST BODY FOR THE CATALYTIC OXIDATION OF SO2 INTO SO3

CORP CATALYTIQUE SERVANT À L'OXYDATION CATALYTIQUE DU SO2 EN SO3

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **27.03.2015  EP 15161232**

(43) Veröffentlichungstag der Anmeldung:
**31.01.2018  Patentblatt 2018/05**

(73) Patentinhaber: **BASF SE**
**67056 Ludwigshafen am Rhein (DE)**

(72) Erfinder:
• **GRÜNE, Philipp**
**68161 Mannheim (DE)**
• **WALSDORFF, Christian**
**67061 Ludwigshafen (DE)**
• **SCHUBERT, Markus**
**67063 Ludwigshafen (DE)**
• **BORCHERT, Holger**
**67591 Offstein (DE)**

• **VAN DORLAND, Jacob Cornelis**
**69502 Hemsbach (DE)**
• **ZÜHLKE, Jürgen**
**67346 Speyer (DE)**
• **LIPP, Stefan**
**76199 Karlsruhe (DE)**
• **KRÄMER, Michael**
**67734 Katzweiler (DE)**

(74) Vertreter: **BASF IP Association**
**BASF SE**
**G-FLP-C006**
**67056 Ludwigshafen (DE)**

(56) Entgegenhaltungen:
**EP-A1- 0 355 664     EP-A1- 0 732 146**
**EP-A2- 0 020 963     EP-A2- 0 129 903**
**DE-T2- 68 919 235     US-A- 4 485 190**
**US-A- 5 330 958**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 274 086 B1

**Beschreibung**

Die Erfindung betrifft einen Katalysatorformkörper für die Oxidation von $SO_2$ zu $SO_3$, ein Verfahren zu seiner Herstellung sowie seine Verwendung in einem Verfahren zur Oxidation von $SO_2$ zu $SO_3$.

Schwefelsäure wird praktisch ausschließlich über die Oxidation von Schwefeldioxid ($SO_2$) zu Schwefeltrioxid ($SO_3$) im so genannten Kontakt-/Doppelkontaktverfahren mit anschließender Hydrolyse gewonnen. Bei diesem Prozess wird $SO_2$ mit molekularem Sauerstoff an Vanadium enthaltenden Katalysatoren in mehreren hintereinander liegenden adiabaten Schichten (Horden) zu $SO_3$ oxidiert. Der $SO_2$-Gehalt des Eduktgases liegt üblicherweise zwischen 0,01 und 50 Vol.-% und das Verhältnis von $O_2/SO_2$ zwischen 0,5 und 5. Eine bevorzugte Sauerstoffquelle ist Luft. Ein Teil des Schwefeldioxids wird in den einzelnen Horden umgesetzt, wobei das Gas jeweils zwischen den einzelnen Horden abgekühlt wird (Kontaktverfahren). Bereits gebildetes $SO_3$ kann durch Zwischenabsorption aus dem Gasstrom entfernt werden, um höhere Gesamtumsätze zu erzielen (Doppelkontaktverfahren). Die Umsetzung erfolgt je nach Horde in einem Temperaturbereich zwischen 340°C bis 680°C, wobei die maximale Temperatur aufgrund des sinkenden $SO_2$-Gehaltes mit zunehmender Hordennummer abnimmt.

Heutige kommerzielle Katalysatoren enthalten üblicherweise neben Vanadium auch Alkalimetallverbindungen, vor allem Kaliumverbindungen aber gegebenenfalls auch Natriumverbindungen und/oder Cäsiumverbindungen, sowie Sulfat. Als Träger für die zuvor erwähnten Komponenten werden üblicherweise poröse Oxide verwendet, wie insbesondere Siliziumdioxid, $SiO_2$. Unter Reaktionsbedingungen bildet sich auf dem Trägermaterial eine Alkalipyrosulfatschmelze aus, in welcher die Aktivkomponente Vanadium in Form von Oxosulfat-Komplexen gelöst wird (Catal. Rev.-Sci. Eng., 1978, Bd. 17(2), Seiten 203 bis 272). Man spricht von einem supported liquid phase catalyst.

Die Gehalte an Vanadium, berechnet als $V_2O_5$, liegen meist zwischen 3 und 10 Gew.-%, die Gehalte an Alkalimetallen (M), berechnet als $M_2O$, bei 5 bis 30 Gew.-%, wobei das molare Verhältnis von Alkalimetall zu Vanadium (M/V Verhältnis) üblicherweise zwischen 2 und 6 liegt. Der Gehalt an Kalium, berechnet als $K_2O$, liegt üblicherweise zwischen 6 und 15 Gew.-% und an Sulfat zwischen 12 und 30 Gew.-%. Daneben wurde über die Verwendung zahlreicher weiterer zusätzlicher Elemente berichtet, wie beispielsweise Chrom, Eisen, Aluminium, Phosphor, Mangan und Bor. Als poröses Trägermaterial wird überwiegend $SiO_2$ eingesetzt.

Die Herstellung derartiger Katalysatoren im industriellen Maßstab erfolgt üblicherweise durch Vermischen wässriger Lösungen bzw. Suspensionen der verschiedenen Aktivkomponenten, beispielsweise entsprechender Vanadiumverbindungen ($V_2O_5$, Ammoniumpolyvanadat, Ammoniummetavanadat, Alkalimetallvanadate bzw. Vanadylsulfate) mit Alkalimetallsalzen (Nitraten, Carbonaten, Oxiden, Hydroxiden, Sulfaten), unter Umständen mit Schwefelsäure und sonstigen Komponenten, welche als Porenbildner bzw. Schmiermittel fungieren können, wie beispielsweise Schwefel, Stärke oder Graphit, mit dem Trägermaterial. Die daraus resultierende Masse wird im nächsten Schritt zu den gewünschten Formkörpern verarbeitet und schließlich thermisch behandelt (Trocknung und Kalzinierung).

US 4,485,190 beschreibt die Herstellung eines Katalysators für die Oxidation von $SO_2$ zu $SO_3$ enthaltend V, K und eine Siliziumoxid-Verbindung. Als Formkörper werden in Spalte 2, Zeilen 30 ff. und Spalte 5, Zeilen 62 ff. unter anderem Trilobe genannt. In Spalte 6, Zeilen 5 ff. wird gesagt, dass Trilobe eine um 18 % größere Oberfläche haben, ohne dass weitere Angaben zur Größe der miteinander verglichenen Formkörper gemacht werden. Die Form der erwähnten Trilobe wird nicht näher angegeben. Trilobe mit Durchgängen werden nicht erwähnt. In den Ausführungsbeispielen werden keine Trilobe hergestellt.

DE 689 19 235 T2 beschreibt einen Katalysator zur Oxidation von $SO_2$ zu $SO_3$ enthaltend Vanadium, Kalium und eine Siliziumoxid-Verbindung. Als Formkörper werden auf Seite 2, Zeilen 2 ff. hohle oder kompakte Zylinder, mehrfach gelappte Zylinder, gegebenenfalls mit spiralförmigen Vertiefungen, vorgeschlagen. Andere Formen werden nicht beschrieben.

EP 464 633 A1 beschreibt einen Träger für einen Katalysator für die Herstellung von ungesättigten Estern. Als mögliche Träger sind in den Abbildungen 4 und 5 Trilobe mit drei Durchgängen und in den Abbildungen 6 und 7 Formkörper mit mehr als drei Durchgängen offenbart. In den Ausführungsbeispielen werden nur Formkörper mit einer Bohrung beschrieben.

DE 692 20 225 T2 beschreibt Katalysatoren in Form von Triloben mit 3 Durchgängen, insbesondere für die Herstellung von Formaldehyd. Die Katalysatoren werden in den Beispielen durch Tablettierung gewonnen und haben eine definierte Länge. Als vorteilhafte Eigenschaft werden eine hohe tatsächliche Oberfläche pro Volumen und ein geringer Druckverlust genannt.

DE 696 35 919 T2 beschreibt Katalysatoren in Form von Triloben mit Durchgängen, insbesondere für die Herstellung von Formaldehyd, die durch Extrusion oder Tablettierung hergestellt werden können. In den Ausführungsbeispielen werden die Katalysatoren durch Tablettierung hergestellt und weisen eine definierte Länge auf.

US 2009/0306410 A1 beschreibt Katalysatoren in Form von Triloben mit 3 Durchgängen, insbesondere für die Herstellung von Maleinsäureanhydrid. Die Katalysatoren werden in den Beispielen durch Tablettierung gewonnen und haben eine definierte Länge. Als vorteilhafte Eigenschaften werden eine hohe tatsächliche Oberfläche pro Volumen und ein geringer Druckverlust genannt.

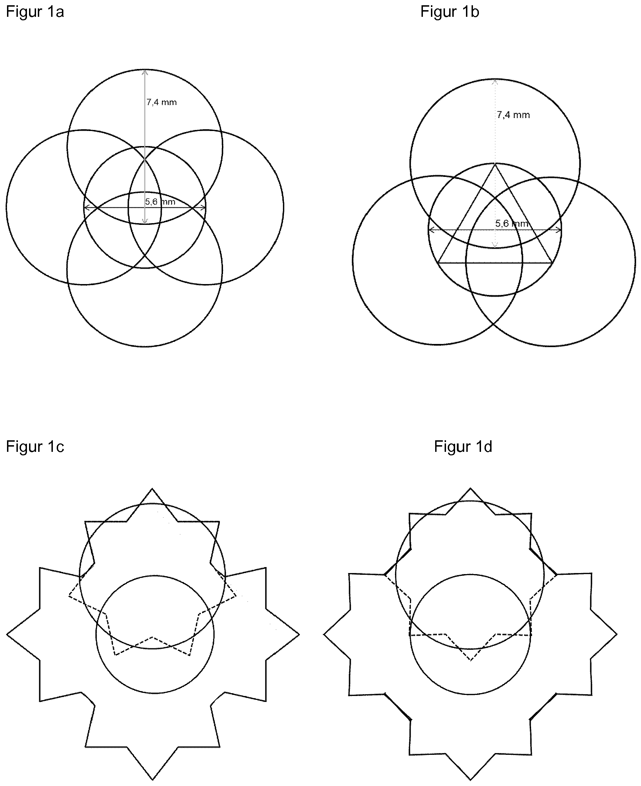

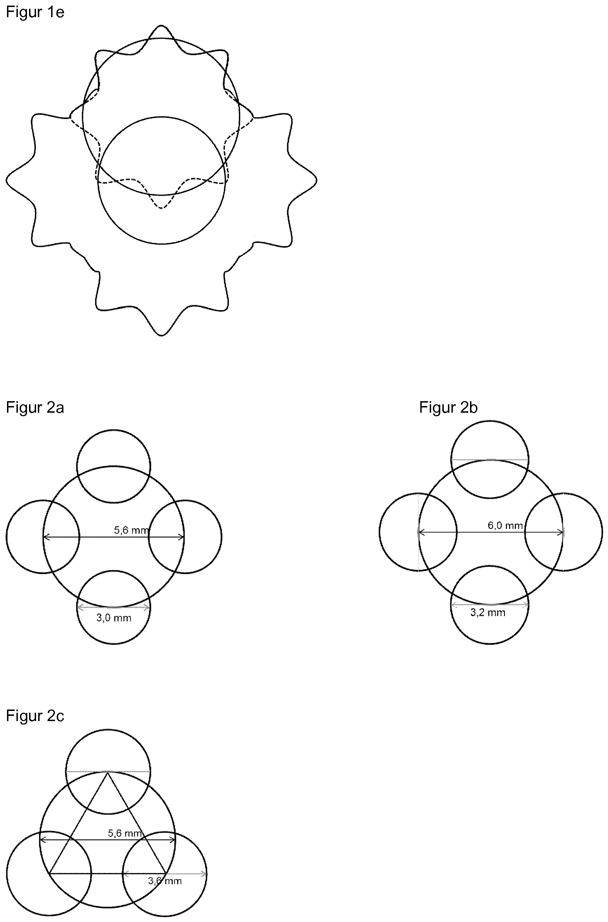

EP 417 722 A1 beschreibt Katalysatoren zur Herstellung von ungesättigten Aldehyden. Als Beispiele werden in Figur 1 Formkörper mit 3 bzw. 4 Durchgängen gezeigt. In Beispiel 4 werden Formkörper mit 3 Durchgängen durch Extrusion erhalten und bei einer Länge von 5 mm abgeschnitten. Für die Formkörper werden eine geometrische Oberfläche pro Volumen sowie der Druckverlust angegeben.

Aufgabe der Erfindung ist es, Katalysatorformkörper für die Oxidation von $SO_2$ zu $SO_3$ bereitzustellen, die eine möglichst große volumenspezifische geometrische Oberfläche aufweisen. Es ist bekannt, dass bei Vanadium enthaltenden Katalysatoren für die Oxidation von $SO_2$ zu $SO_3$ eine große volumenspezifische geometrische Oberfläche eine hohe Katalysatoraktivität bedingt. Weiterhin sollen die Katalysatorformkörper bei möglichst großer volumenspezifischer geometrischer Oberfläche einen möglichst geringen Druckverlust bewirken.

Gelöst wird die Aufgabe durch Katalysatorformkörper für die Oxidation von $SO_2$ zu $SO_3$ enthaltend Vanadium, mindestens ein Alkalimetall und Sulfat auf einem Siliziumdioxid-Trägermaterial, wobei der Formkörper die Form eines Zylinders mit 4 hohlzylindrischen Ausbuchtungen aufweist, erhältlich durch Extrusion einer Katalysatorvorläufermasse, umfassend Vanadium, mindestens ein Alkalimetall und Sulfat auf einem Siliziumdioxid-Trägermaterial durch die Öffnung eines Extrusionswerkzeugs, wie im Anspruch 1 definiert.

Der Einfluss verschiedener Formkörper-Geometrien auf den Druckverlust ist nicht intuitiv. Überraschenderweise zeigt sich beispielsweise, dass eine "Boomerang"-Form bei fast identischer volumenspezifischer geometrischer Oberfläche einen signifikant höheren Druckverlust erzeugt als ein 11 x 4 mm-Sternstrang mit Loch. Dagegen zeichnet sich eine erfindungsgemäße Kleeblatt-Form mit 4 Durchgängen durch eine fast 27 % höhere spezifische Oberfläche bei einem nur 15 % höheren Druckverlust gegenüber der Sternenstrang-Form aus.

Bevorzugt sind die die Kreisringe begrenzenden äußeren und inneren Kreise, und damit die Durchgänge der hohlzylindrischen Ausbuchtungen der resultierenden Formkörper, konzentrisch. Dies ist jedoch nicht zwingend. Die Kreise und damit die Durchgänge der hohlzylindrischen Ausbuchtungen können auch exzentrisch angeordnet sein. In einer Ausführungsform der Erfindung sind sie exzentrisch angeordnet, d.h. die Mittelpunkte sind verschieden, beispielsweise sind die inneren Kreis (bzw. die Durchgänge) nach außen oder nach innen verschoben. Die Mittelpunkte der äußeren Kreise liegen dabei im Wesentlichen auf der Kreislinie. "Im Wesentlichen auf einer Kreislinie liegend" bedeutet dabei, dass die Mittelpunkte innerhalb einer Abweichung von +/- 20%, bevorzugt innerhalb einer Abweichung von +/- 10% auf einer Kreislinie mit dem Durchmesser y liegen.

Die Öffnung des Extrusionswerkzeugs weist einen Querschnitt auf, der von 4 mit ihren Mittelpunkten im Wesentlichen auf einer Kreislinie mit dem Durchmesser y liegenden, sich teilweise überlagernden Ringen gebildet wird. Die Ringe werden von einer äußeren, auf einem Kreis mit einem äußeren Durchmesser x1 liegenden Linie und einer inneren, auf einem Kreis mit einem inneren Durchmesser x2 liegenden Linie begrenzt. Die die Ringe begrenzenden äußeren und inneren, auf einem Kreis liegenden Linien sind vorzugsweise diese Kreise selbst. Entsprechende nichterfindungsgemäße Ausführungsformen sind in den Figuren 1a, 1b gezeigt. Es kann sich aber auch um kreisförmige, gewellte oder kreisförmige, gezackte äußere und/oder innere Linien handeln, die auf den Kreisen mit dem äußeren Durchmesser x1 bzw. dem inneren Durchmesser x2 liegen. Auf einem Kreis mit dem äußeren Durchmesser x1 bzw. dem inneren Durchmesser x2 liegen die Linien dann, wenn ihr Abstand vom Kreismittelpunkt periodisch, beispielsweise in Form einer Welle oder in Form von Zacken, um den Wert x1 bzw. x2 schwankt, im Allgemeinen um maximal +/- 25% des jeweiligen Wertes. Im Allgemeinen sind der äußere Durchmesser x1 bzw. der innere Durchmesser x2 dann der Mittelwert dieses Abstands vom Kreismittelpunkt. Es können nur die äußere oder nur die innere oder beide begrenzenden Linien beispielsweise gewellt oder gezackt sein. Entsprechende nichterfindungsgemäße Ausführungsformen sind in den Figuren 1c bis 1e gezeigt.

Alle Kreisringe des Querschnitts der Öffnung des Extrusionswerkzeugs weisen den gleichen äußeren Durchmesser x1 und die gleichen inneren Durchmesser x2 auf, das heißt die resultierenden hohlzylindrischen Ausbuchtungen und ihre Durchgänge sind gleich groß.

Der Querschnitt der Öffnung des Extrusionswerkzeugs wird von 4 Kreisringen gebildet, wobei die Mittelpunkte der den Querschnitt bildenden Kreisringe ein Quadrat bilden. Die resultierenden Formkörper weisen also 4 hohlzylindrische Ausbuchtungen auf, wobei die Mittelpunkte der den Querschnitt bildenden Kreisringe (Mittelpunkte der äußeren Kreise) ein Quadrat bilden.

Das Verhältnis des äußeren Durchmessers zum inneren Durchmesser der Kreisringe x1 : x2 beträgt von 1,5 : 1 bis 5 : 1, besonders von 2 : 1 bis 3 : 1. Dieses Verhältnis findet sich bei den resultierenden Formkörpern wieder. Bevorzugt beträgt das Verhältnis der durchschnittlichen Länge z der Formkörper zum äußeren Durchmesser der Kreisringe z : x1 von 1 : 1 bis 6 : 1, besonders bevorzugt von 1,5 : 1 bis 3 : 1. Dieses Verhältnis findet sich bei den resultierenden Formkörpern wieder.

In besonders bevorzugten Ausführungsformen weisen die erfindungsgemäßen Katalysatorformkörper eines oder mehrere der Merkmale (i) bis (iv) auf:

(i) Durchmesser y der Kreislinie im Bereich von 4 bis 9 mm, bevorzugt 4 bis 6 mm;
(ii) äußere Durchmesse x1 im Bereich von 5,5 bis 11 mm, bevorzugt 5,5 bis 9 mm;

(iii) innere Durchmesser x2 im Bereich von 2,2 bis 7 mm, bevorzugt 2,2 bis 4 mm;

(iv) mittlere Länge z im Bereich von 10 bis 35 mm, bevorzugt 10 bis 25 mm.

Vorzugsweise ist die Differenz von äußerem Durchmesser x1 und innerem Durchmesser x2 derart, dass sich eine Wandstärke der hohlzylindrischen Ausbuchtungen im Bereich von 1,3 bis 3 mm ergibt.

Die erfindungsgemäßen Katalysatorformkörper sind durch Extrusion einer entsprechenden Katalysatorvorläufermasse, umfassend Vanadium, mindestens ein Alkalimetall und Sulfat auf einem Siliziumdioxid-Trägermaterial, durch ein Extrusionswerkzeug herstellbar, das die Geometrie des Formkörper-Querschnitts abbildet. Der Querschnitt der Öffnung des Extrusionswerkzeugs weist dementsprechend eine ideale Geometrie auf, die durch 4 mit ihren Mittelpunkten auf einer Kreislinie mit dem Durchmesser y liegenden, sich teilweise überlagernden Kreisringen, die von einem äußeren Kreis mit einem äußeren Durchmesser x1 und einem inneren Kreis mit einem inneren Durchmesser x2 begrenzt werden, wie im Anspruch 1 definiert, gebildet wird. Die Idealform der erfindungsgemäßen Formkörper wird durch die Geometrie des Extrusionswerkzeugs, durch das die Katalysatorvorläufermasse extrudiert wird, definiert. Selbstverständlich weicht die Geometrie realer extrudierter Formkörper von dieser Idealform ab, wobei die realen Formkörper jedoch im Wesentlichen die oben beschriebenen geometrischen Merkmale aufweisen. Im Allgemeinen verlaufen die Achsen der hohlzylindrischen Ausbuchtungen parallel. Die realen Formkörper können jedoch beispielsweise in z-Richtung leicht gekrümmt sein. Die Löcher (Durchgänge) der erfindungsgemäßen Formkörper können von einer perfekten Kreisform abweichen. Liegt eine große Zahl realer Formkörper vor, so können bei einigen Formkörpern einzelne Durchgänge verschlossen sein. Im Allgemeinen ist die Stirnfläche der Formkörper in der xy-Ebene, bedingt durch den Produktionsprozess, keine glatte Fläche, sondern mehr oder weniger unregelmäßig. Die Länge der Formkörper in z-Richtung (maximale Ausdehnung in z-Richtung) ist im Allgemeinen nicht für alle Formkörper gleich, sondern weist eine Verteilung auf, die durch eine Durchschnittslänge z (arithmetischer Mittelwert) gekennzeichnet ist.

Gegenstand der Erfindung ist auch ein Verfahren zur Herstellung von Katalysatorformkörpern umfassend Vanadium, mindestens ein Alkalimetall und Sulfat auf einem Silikat-Trägermaterial, aus einer Katalysatorvorläufermasse, umfassend Vanadium, mindestens ein Alkalimetall und Sulfat auf einem Silikat-Trägermaterial, durch Extrusion einer Katalysatorvorläufermasse, umfassend Vanadium, mindestens ein Alkalimetall und Sulfat auf einem Siliziumdioxid-Trägermaterial durch die Öffnung eines Extrusionswerkzeugs, wobei die Öffnung des Extrusionswerkzeugs einen Querschnitt aufweist, der von 3 bzw. 4 mit ihren Mittelpunkten auf einer Kreislinie mit dem Durchmesser y liegenden, sich teilweise überlagernden Kreisringen, die von einem äußeren Kreis mit einem äußeren Durchmesser x1 und einem inneren Kreis mit einem inneren Durchmesser x2 begrenzt werden, gebildet wird, wie im Anspruch 6 definiert. Im Allgemeinen enthalten die Katalysatoren neben Vanadium auch Alkalimetallverbindungen, vor allem Kaliumverbindungen aber gegebenenfalls auch Natriumverbindungen und/oder Cäsiumverbindungen, sowie Sulfat. Als Träger für die zuvor erwähnten Komponenten werden poröse Oxide verwendet wie Siliziumdioxid, $SiO_2$.

Als inerte Trägermaterialien werden vor allem poröse Materialien auf der Basis von $SiO_2$ eingesetzt. Dabei können synthetische Varianten von $SiO_2$ als auch natürliche Formen von $SiO_2$ oder deren Mischungen eingesetzt werden.

Der Gehalt an Vanadium, berechnet als $V_2O_5$, beträgt im Allgemeinen 3 bis 10 Gew.-%, der Gehalt an Alkalimetallen (M), berechnet als $M_2O$, 5 bis 30 Gew.-%, wobei das molare Verhältnis von Alkalimetall zu Vanadium (M/V Verhältnis) üblicherweise zwischen 2 und 6 liegt. Der Gehalt an Kalium, berechnet als $K_2O$, liegt üblicherweise zwischen 6 und 15 Gew.-% und der Gehalt an Sulfat zwischen 12 und 30 Gew.-%. Daneben können weitere Elemente enthalten sein, wie beispielsweise Chrom, Eisen, Aluminium, Phosphor, Mangan und Bor.

Ein bevorzugtes Trägermaterial enthält natürlich vorkommende Diatomeenerde. Besonders bevorzugt enthält das Trägermaterial mindestens zwei verschiedene natürlich vorkommende, nicht kalzinierte Diatomeenerden, welche sich im Strukturtyp der ihnen zugrundeliegenden Kieselalgen unterscheiden, wobei die verschiedenen Strukturtypen ausgewählt sind aus tellerförmigen, zylinderförmigen und stäbchenförmigen Strukturtypen.

Die daraus hergestellten Katalysatoren verfügen über eine besonders gute mechanische Stabilität.

Bevorzugte Diatomeenerden sollten einen Gehalt an Aluminiumoxid $Al_2O_3$ von kleiner als 5 Gew.-%, bevorzugt kleiner als 2,6 Gew.-% und insbesondere kleiner als 2,2 Gew.-% aufweisen. Ihr Gehalt an Eisen(III)oxid $Fe_2O_3$ sollte kleiner als 2 Gew.-% sein, bevorzugt kleiner als 1,5 Gew.-% und insbesondere kleiner als 1,2 Gew.-% sein. Ihr Gehalt an der Summe von Erdalkalimetalloxiden (Magnesiumoxid MgO + Kalziumoxid CaO) sollte kleiner als 1,8 Gew.-%, bevorzugt kleiner als 1,4 Gew.-% und insbesondere kleiner als 1,0 Gew.-% sein.

Nicht kalzinierte Diatomeenerde ist vor dem Vermischen mit den Aktivkomponenten nicht bei Temperaturen oberhalb von 500°C, bevorzugt nicht oberhalb von 400°C und insbesondere nicht oberhalb von 320°C behandelt worden. Charakteristisches Merkmal der nicht kalzinierten Diatomeenerde ist, dass das Material im Wesentlichen amorph ist, d.h. der Gehalt an Cristobalit bei < 5 Gew.-%, bevorzugt < 2 Gew.-% und besonders bevorzugt < 1 Gew.-% liegt, bestimmt mittels Röntgenbeugungsanalyse.

Selbstverständlich kann die natürlich vorkommende, nicht kalzinierte Diatomeenerde abgesehen von der Kalzination nach dem Abbau und vor der Verwendung als Trägermaterial unterschiedlichen Aufbearbeitungsschritten unterworfen worden sein, beispielsweise Schlämmen, Waschen, Extraktion, Trocknen und/oder Sichten.

Der mittlere volumenbezogene Porendurchmesser, bestimmt mittels Quecksilberporosimetrie, der verschiedenen verwendbaren Diatomeenerden sollte zwischen 0,1 $\mu$m und 10 $\mu$m, bevorzugt zwischen 0,5 $\mu$m und 9 $\mu$m und insbesondere zwischen 0,7 $\mu$m und 7 $\mu$m liegen. Der mittlere volumenbezogene Porendurchmesser der Mischungen von nicht kalzinierten Diatomeenerden sollte zwischen 0,5 $\mu$m und 9 $\mu$m, bevorzugt zwischen 0,8 und 7 $\mu$m und insbesondere zwischen 0,9 und 5 $\mu$m liegen. Dabei kann die Form der Porenverteilung der erfindungsgemäßen Mischungen deutlich von der der einzelnen Diatomeenerde abweichen. Bimodale Porenverteilungen oder Porenverteilungen mit ausgeprägten Schultern können je nach Kombination der unterschiedlichen Diatomeenerden resultieren. Die Einstellung eines bestimmten mittleren volumenbezogenen Porendurchmessers innerhalb der oben beschriebenen Grenzen durch Mischen unterschiedlicher Diatomeenerden in verschiedenen Verhältnissen ist prinzipiell möglich.

Die Herstellung der Katalysatoren erfolgt durch Vermischen von wässrigen Lösungen oder von Suspensionen der verschiedenen Aktivkomponenten, beispielsweise entsprechender Vanadiumverbindungen ($V_2O_5$, Ammoniumpolyvanadat, Ammoniummetavanadat, Alkalimetallvanadate bzw. Vanadylsulfate) mit Alkalimetallsalzen (Nitraten, Carbonaten, Oxiden, Hydroxiden, Sulfaten), gegebenenfalls mit Schwefelsäure und sonstigen Komponenten, welche als Porenbildner bzw. Schmiermittel fungieren können wie beispielsweise Schwefel, Stärke oder Graphit, mit dem Trägermaterial. Der Mischvorgang ist nicht weiter eingeschränkt und kann beispielsweise in einem Kneter, einem Schneckenmischer, einem Schaufelmischer oder einem sogenannten "Mix Muller", in dem die Komponenten durch rotierende Räder und Schaber vermischt werden, erfolgen.

Die daraus resultierende Masse wird im nächsten Schritt zu den erfindungsgemäßen Formkörpern extrudiert, getrocknet und kalziniert. Die Art des Extruders ist hierbei nicht weiter eingeschränkt. Es können beispielsweise Kolbenextruder, Schneckenextruder, Kaskadenextruder oder Planetwalzenextruder eingesetzt werden. Bevorzugt ist die Verwendung von Schneckenextrudern, insbesondere von Schneckenextrudern mit einer oder zwei Schneckenwellen. Die Schneckenwellen können hinsichtlich ihrer Geometrie, beispielsweise hinsichtlich ihres Nenndurchmessers, der Gangtiefe und/oder der Steigung, dahingehend optimiert werden, dass sie möglichst gleichmäßige Extrudate erzeugen. Das Material der Schneckenwelle oder ihrer Oberfläche, wie auch das Material des Schneckenzylinders oder seiner Oberfläche und des Extrusionswerkzeugs oder seiner Oberfläche kann beispielsweise dahingehend optimiert werden, dass es eine möglichst große Beständigkeit gegenüber der zu extrudierenden Masse aufweist. Auf Grund des niedrigen pH-Wertes der Masse sind insbesondere korrosions- und säurebeständige Materialien bevorzugt. Die zu verarbeitenden Materialien können der Schnecke kontinuierlich oder diskontinuierlich über einen Trichter von oben zugeführt werden. Eine reproduzierbare Dosierung und Füllhöhe im Trichter kann zu verbesserter Qualität der Extrusion führen.

Die Art der Extrusion ist ebenfalls nicht weiter eingeschränkt. Beispielsweise kann eine Kalt-, Warm- oder Heißextrusion verwendet werden. Die zu extrudierende Masse hat beim Eingang in den Extruder typischerweise eine Temperatur von 10 bis 90 °C. Das Extrudergehäuse mit dem Schneckenzylinder kann mit einem Kühlmedium, beispielsweise Wasser, gekühlt werden, um zu verhindern, dass Bauteile durch zu hohe Temperaturen deformiert werden. In einem solchen Falle beträgt die Temperatur des Kühlmediums im Vorlauf typischerweise 0 bis 80 °C. Die Temperatur des Extrudats direkt nach Verlassen des Extruders beträgt typischerweise 10 bis 90°C. Die Schneckendrehzahl beträgt typischerweise 1 bis 100 Umdrehungen pro Minute, oft 2 bis 30 Umdrehungen pro Minute. Der Druck im Extruder vor dem Extrusionswerkzeug beträgt typischerweise 20 bis 500 bar. Das Drehmoment, welches die Schnecke überträgt, beträgt typischerweise 50 bis 5000 Nm.

Extrusionswerkzeuge können aus einem oder mehreren Bauteilen bestehen. In einer bevorzugten Form bestehen sie aus einer Matrize und Einsatzstiften, wobei die Matrize weitestgehend die Form, Größe und Position der äußeren Kreise festlegt und die Einsatzstifte die Form, Größe und Position der inneren Kreise festlegt. Die Einsatzstifte können in die Matrize eingesetzt werden. Die translatorische und rotatorische Zentrierung der Einsatzstifte in der Matrize kann durch eine geeignete Bauart von Matrize und Einsatzstiften erreicht werden, beispielsweise durch eine Nut in einem Bauteil und eine Feder im anderen Bauteil. Die Zentrierung kann auch mit Hilfe eines zusätzlichen Zentrierwerkzeugs geschehen.

Besteht das Extrusionswerkzeug aus mehreren Bauteilen, so können die Bauteile aus dem gleichen oder aus unterschiedlichen Materialien bestehen. In einer bevorzugten Ausführungsform besteht die Matrize aus einem möglichst säurebeständigen Kunststoff, beispielsweise PTFE und die Einsatzstifte aus einem säurebeständigen Edelstahl. Die Matrizen können kostengünstig beispielsweise durch Spritzguss hergestellt werden.

Die Formkörper werden nach der Extrusion im Allgemeinen einem Trocknungsschritt unterzogen. Hierbei ist die Art des Ofens nicht weiter eingeschränkt. Es können beispielsweise stationäre Umluftöfen, Drehrohröfen oder Bandöfen eingesetzt werden. Die Dauer der Trocknung beträgt im Allgemeinen 0,5 bis 20 Stunden und die Temperatur beträgt im Allgemeinen 50 bis 200 °C.

Die Formkörper werden nach der Trocknung im Allgemeinen einem Kalznierschritt unterzogen. Hierbei ist die Art des Ofens nicht weiter eingeschränkt. Es können beispielsweise stationäre Umluftöfen, Drehrohröfen oder Bandöfen eingesetzt werden. Die Dauer des Kalzinierens beträgt im Allgemeinen 0,5 bis 20 Stunden und die Temperatur beträgt im Allgemeinen 200 bis 800 °C.

Es kann nach der Kalzination oder bereits zu anderen Zeitpunkten im Herstellverfahren des Katalysators vorteilhaft sein, die Formkörper bezüglich Ihrer Dimensionen zu sortieren und nur eine geeignete Größenfraktion zu nutzen. Eine solche Sortierung kann beispielsweise über geeignete Siebe erfolgen. Formkörper, die größer oder kleiner als die gewünschte Dimension sind, können beispielsweise an geeigneten Stellen dem Prozess als Rückgut zurückgeführt werden. Es kann vorteilhaft sein, dieses Rückgut vor der Rückführung einer oder mehreren weiteren Verfahrensstufen zu unterziehen, beispielsweise einer Mahlung.

Gegenstand der vorliegenden Erfindung ist auch die Verwendung der Katalysatorformkörper gemäß des Anspruchs 1 zur Oxidation von $SO_2$ zu $SO_3$. Gegenstand der vorliegenden Erfindung ist weiterhin ein Verfahren zur Oxidation von $SO_2$ zu $SO_3$, bei dem ein Sauerstoff und Schwefeldioxid enthaltendes Gasgemisch bei einer Temperatur im Bereich von 340 bis 680 °C mit einer Schüttung aus den erfindungsgemäßen Katalysatorformkörpern gemäß des Anspruchs 1 in Kontakt gebracht wird. Als Reaktoren werden typischerweise Hordenreaktoren eingesetzt (siehe beispielsweise "H. Müller, Sulfuric Acid and Sulfur Trioxide in Ullmann'a Encyclopedia of Industrial Chemistry, Wiley-VCH, 2012"; DOI: 10.1002/14356007.a25_635). In diesen Hordenreaktoren befinden sich mehrere Reaktionshorden, in denen $SO_2$ mit Katalysatorformkörpern in Kontakt gebracht wird. Typischerweise enthält der Reaktor zwischen 1 und 6, zumeist zwischen 3 und 5 Horden. Die Hordenreaktoren verhalten sich im Allgemeinen näherungsweise adiabat, das heißt, dass die bei der Oxidation von $SO_2$ zu $SO_3$ freiwerdende Wärme zu einem großen Teil das Reaktionsgas erhitzt. Die exotherme Oxidation von $SO_2$ zu $SO_3$ wird durch das thermodynamische Gleichgewicht limitiert, welches sich mit zunehmender Temperatur in Richtung der Edukte verschiebt. Nach dem Durchgang durch eine Horde wird daher das Reaktionsgas, beispielsweise in geeigneten Wärmetauschern, abgekühlt, bevor es der nächsten Horde zugeführt wird. Weiterhin gibt es Prozesse, in denen zwischen zwei Horden das gebildete $SO_3$, beispielsweise durch Absorption in konzentrierter Schwefelsäure, weitgehend aus dem Reaktionsgas entfernt wird, um den Umsatz von verbleibendem $SO_2$ in den nachfolgenden Horden zu erhöhen.

Die Konzentration an $SO_2$ im Reaktionsgas vor Eintritt in die erste Horde beträgt im Allgemeinen 2 bis 20 Vol.-%, je nach $SO_2$-Quelle beträgt sie typischerweise zwischen 5 und 15 Vol.-%. Die Konzentration an $O_2$ im Reaktionsgas vor Eintritt in die erste Horde beträgt ebenfalls im Allgemeinen zwischen 2-20 Vol.-%, je nach $SO_2$-Quelle liegt sie typischer Weise zwischen 5 und 15 Vol.-%. Die Volumenströme betragen im Allgemeinen 10 000 bis 500 000 $Nm^3$/h, typischer Weise 30 000 bis 350 000 $Nm^3$/h. Der Durchmesser der Reaktoren beträgt typischerweise 2 bis 15 m, normalerweise 3 bis10 m. Das Volumen der katalytischen Schüttung pro Horde beträgt im Allgemeinen 10 bis 500 $m^3$, üblicher Weise 20 bis 350 $m^3$. Die Höhe der katalytischen Schüttung pro Horde beträgt im Allgemeinen 0,3 bis 3 m, typischer Weise 0,5 bis 2,5 m. Die Gasbelastung in $Nm^3$/h, bezogen auf das Katalysatorvolumen in $m^3$ (GHSV), beträgt im Allgemeinen 100 bis 5000 $h^{-1}$, üblicher Weise 500 bis 2500 $h^{-1}$. Die Strömung ist typischerweise im laminaren Bereich, die Reynoldszahl der Strömung in der Horde beträgt im Allgemeinen 10 bis 1000, typischer Weise 30 bis 500. Der Druckverlust über die Schüttung einer Horde beträgt im Allgemeinen 2 bis 100 mbar, typischerweise 5 bis 50 mbar.

Es ist von wirtschaftlichem Vorteil, wenn der Druckverlust über den Prozess, insbesondere über Reaktor, Wärmetauscher und gegebenenfalls Absorptionsturm gering ist, um geringe Kosten für die Verdichtung des Reaktionsgases zu haben und um die Druckfestigkeitsanforderungen der Bauteile zu minimieren. Eine katalytische Schüttung, welche sich durch einen niedrigen Druckverlust und eine hohe Aktivität auszeichnet, ist hierbei vorteilhaft.

Die Erfindung wird durch die nachstehenden Beispiele näher erläutert.

Beispiele

Beispiel 1

Herstellung der Katalysatormasse

0,8991 kg (30 Gew.-% bezogen auf die Mischung der Diatomeenerden) einer Diatomeenerde des Typs MN der Firma EP Minerals, 1,4985 kg (50 Gew.-% bezogen auf die Mischung der Diatomeenerden) einer Diatomeenerde des Typs Masis der Firma Diatomite SP CJSC und 0,5994 kg (20 Gew.-% bezogen auf die Mischung der Diatomeenerden) einer Diatomeenerde des Typs Diatomite 1 der Firma Mineral Resources Ltd. werden 30 Minuten mit 45 Umdrehungen pro Minute in einem Röhnradmischer (Firma Engelsmann, Behältervolumen 32 Liter) gemischt. In einem Mix-Muller (Firma Simpson, Baujahr 2007, Behältervolumen 30 Liter) wird die Mischung der Diatomeenerden vorgelegt und 2 Minuten bei 33 Umdrehungen pro Minute gekollert. Daraufhin wird über einen Zeitraum von 2 Minuten eine erste Lösung bestehend aus 1,3706 kg wässriger KOH-Lösung (47,7 Gew.-%) und 0,532 kg Ammoniumpolyvanadat (Firma Treibacher) zugegeben und 1 Minute weiter gekollert. Über einen Zeitraum von 2 Minuten wird 2,1025 kg 48-prozentige Schwefelsäure zugegeben und eine weitere Minute bei 33 Umdrehungen pro Minute gekollert. Als nächstes werden 0,3 kg $K_2SO_4$ (Firma K+S Kali GmbH) in 1,587 kg einer 50-prozentigen wässrigen $Cs_2SO_4$-Lösung gegeben, über einen Zeitraum von 2 Minuten in den Mix-Muller gegeben und 1 weitere Minute bei 33 Umdrehungen pro Minute gekollert und dann unter fortgesetzten Kollern 180 g einer Stärkelösung (7,39 Gew.-% Kartoffelstärke in VE-Wasser) zugegeben. Die erhaltene Masse wird weiterhin bei 33 Umdrehungen pro Minute weitergekollert, bis die gesamte Kollerzeit ab Zugabe der Diatomeenerde insgesamt 15 Minuten beträgt.

Vergleichsbeispiel

Die Geometrie des erfindungsgemäßen Formkörpergrundrisses wird durch eine Matrize festgelegt, durch die die zu extrudierende Masse unter hohem Druck gefördert wird. Der Druckverlust der technischen Formkörper wird durch eine Vielzahl von Realeffekten beeinflusst, beispielsweise die Krümmung der Formkörper, die genaue Längenverteilung, die Brucheigenschaften und die daraus resultierende Beschaffenheit des Formkörpers, insbesondre der Stirnflächen. Diese Eigenschaften können von der Geometrie des Formkörperquerschnittes bzw. der Geometrie der verwendeten Matrize abhängen.

Für einen Vergleich der Druckverluste von unterschiedlichen realen Formkörpern ist deren experimentelle Bestimmung notwendig. Es werden im technischen Betrieb Sternstränge mit 7 Zacken, einem äußeren Durchmesser an den Zackenspitzen von 11 mm und einem zentralen Loch mit einem Durchmesser 4 mm extrudiert.

Hierbei kommt ein Schneckenextruder mit einer Schnecke zum Einsatz. Die Feststoffzugabe in die Schnecke erfolgt von oben. Der Extruder wird mit Wasser gekühlt. Die Drehgeschwindigkeit der Förderschnecke im Extruder beträgt 10 Umdrehungen pro Minute. Die Temperatur des Feststoffs bei der Zugabe und der Formkörper beim Austritt aus dem Extruder beträgt um die 50 °C. Der Durchsatz durch einen Extruder beträgt 6000 kg pro Tag. Unter anderem weil die Fördergeschwindigkeit der Stränge nicht konstant ist, erhält man keine einheitliche Länge, sondern vielmehr eine Längenverteilung. Weiterhin ist die durchschnittliche Länge von der Geometrie der Matrize abhängig. Die Formkörper werden anschließend für 2 Stunden bei 120 °C getrocknet und für 3 Stunden bei 475 °C kalziniert. Über Siebvorrichtungen werden zu große und zu kleine Formkörper entfernt.

Für jede Matrizenform wurden insgesamt mindestens 100 Formkörper zufällig ausgewählt, die jeweils längste Längenausdehnung eines jeden Formkörpers bestimmt und der Mittelwert als mittlere Länge des gegebenen Formkörpers angenommen. Die mittlere Oberfläche eines gegebenen der Körper mit mittlerer Länge wurde dann unter der Annahme einer idealisierten Geometrie ohne Krümmung entlang der z-Achse und einer glatten, rechtwinklig zur z-Achse stehenden xy-Ebene berechnet.

Weiterhin wurden von diesen Formkörpern das Gesamtgewicht und das mittlere Gewicht (arithmetischer Mittelwert) eines Formkörpers bestimmt.

Die Schüttdichte der Katalysatorformkörper wurde in einem 500 mm langen Rohrstück aus Glas mit einem Innendurchmesser von 200 mm ermittelt.

Die Oberflächendichte (in $m^{-1}$) wurde dann berechnet als (Schüttdichte x mittlere Oberfläche) / mittleres Gewicht.

Der Druckverlustbeiwert der Katalysatorformkörper wurde in einem 500 mm langen Rohrstück aus Glas mit einem Innendurchmesser von 200 mm ermittelt. Dazu wurde das Rohrstück mit den entsprechenden Katalysatorproben befüllt und der Druckverlust bei unterschiedlichen Volumenströmen von Luft bei Raumtemperatur gegen Umgebungsdruck gemessen.

Der Druckverlustbeiwert $\xi$ ist proportional zum Druckverlust und definiert als

$$\xi = \frac{\Delta p}{H} \cdot d_K \cdot \frac{2}{\rho \cdot w^2}$$

mit dem Druckverlust $\Delta p$ in Pascal, der Schütthöhe H in Metern, der konstanten Bezugslänge $d_K$ von 0,01 Metern, der mittleren Gasdichte $\rho$ in kg/m$^3$ und der mittleren Gas-Leerrohrgeschwindigkeit w.

Druckverlustbeiwert $\xi$ lässt sich mit folgender Ausgleichsfunktion beschreiben:

$$\zeta_K = a + \frac{b}{Re}$$

wobei die Reynoldszahl definiert ist als

$$Re = \frac{w \cdot d_K \cdot \rho}{\eta}$$

mit der dynamischen Zähigkeit des Gases $\eta$ in Pascalsekunden.

Die Parameter a und b können durch lineare Regression aus den experimentellen Werten erhalten werden. Typische Reynoldszahlen in einem Schwefelsäurereaktor betragen ca. 100.

Die charakteristischen physikalischen Katalysatorkenngrößen Schneidhärte und Abrieb wurden nach zu den in EP 0019174 beschriebenen Vorschriften ermittelt.

Beispiele 2 bis 4

Es wurden Matrizen gemäß den Figuren 1a und 1b sowie dazu passende Einsatzstifte gemäß den Figuren 2a (Beispiel 2), 2b (Beispiel 3) bzw. 2c (Beispiel 4) gefertigt.

Darin ist also y = 5,6 mm und x1 = 7,4 mm (Figur 1a und 1b), y = 5,6 und x2 = 3 mm (Figur 2a), y = 6,0 und x2 = 3,2 mm (Figur 2b) bzw. y = 5,6 mm und x2 = 3,6 mm (Figur 2c). Gemäß Figur 2b (Beispiel 3) sind die inneren Kreise der Kreisringe bezüglich der Matrize 1a exzentrisch angeordnet.

Mit diesen Matrizen wurden analog zum Vergleichsbeispiel im technischen Betrieb Formkörper extrudiert.

Die Weiterverarbeitung erfolgte ebenfalls analog zum Vergleichsbeispiel.

In der nachstehenden Tabelle sind Länge, mittlere Oberfläche, Schüttdichte, mittleres Gewicht, Oberflächendichte, die Parameter a und b, die relative Oberflächendichte bezogen auf den Sternstrang, der relativen Druckverlustbeiwert (zeta$_{rel}$ at Re=100 [%]) bezogen auf den Sternstrang, die Schneidhärte und der Abrieb angegeben.

| | Vergleichsbeispiel 1 | Beispiel 2 | Beispiel 3 | Beispiel 4 |
|---|---|---|---|---|
| | Stern 11x4 | Kleeblatt4 13x3 | Kleeblatt4, 13x3.2 | Kleeblatt3, 13x3.6 |
| Länge [mm] | 16.9 | 16.5 | 18.0 | 20.0 |
| Oberfläche [$m^2$/Körper] | $1.07\ 10^{-3}$ | $1.454\ 10^{-3}$ | $1.608\ 10^{-3}$ | $1.606\ 10^{-3}$ |
| Schüttdichte [kg/$m^3$] | 420 | 440 | 439 | 437 |
| Gewicht [g/Körper] | 1.264 | 1.475 | 1.564 | 1.557 |
| Oberflächendichte [$m^2$/$m^3$] | 356 | 433 | 451 | 451 |
| a | 14,24 | 15,55 | 17,47 | 16,78 |
| b | 684 | 962,36 | 668,01 | 1635,68 |
| Rel. Oberflächendichte [%] | 100 | 122 | 127 | 127 |
| zeta $_{rel}$ at Re=100 [%] | 100 | 119 | 115 | 157 |
| Schneidhärte | 86 | 109 N | 101 N | 98 N |
| Abrieb | 1,6% | 1,4% | 0,7% | 0.8% |

Es ist zu erkennen, dass die Oberflächendichte der Katalysatoren der Beispiele 2 bis 4 122 % bzw.127 % von der Oberflächendichte des Katalysators aus Vergleichsbeispiel 1 beträgt. Der Anstieg der Oberflächendichte geht einher mit einem nur moderaten Anstieg des Druckverlustbeiwerts bei einer Reynoldszahl von 100, welcher proportional zum Druckverlust ist, der sich in einem technischen Reaktor bei typischen Reaktionsbedingungen der $SO_2$-Oxidation einstellt. Der Druckverlustbeiwert der Katalysatoren der Beispiele 2-4 beträgt bei einer Reynoldszahl von 100 lediglich 119 %, 115 % bzw.157 % des Druckverlustbeiwerts des Katalysators aus Vergleichsbeispiel 1. Die Zunahme des Druckverlustbeiwerts der Katalysatoren mit vier Löchern (Beispiele 2 und 3) ist hierbei geringer als derjenige des Katalysators mit drei Löchern. Die Schneidhärte der erfindungsgemäßen Katalysatoren aus den Beispielen 2 bis 4 ist größer als beim Katalysator aus Vergleichsbeispiel 1, wohingegen der Abrieb geringer ist. Dementsprechend sind die mechanischen Eigenschaften der erfindungsgemäßen Katalysatoren dem Stand der Technik ebenfalls überlegen.

**Patentansprüche**

1. Katalysatorformkörper für die Oxidation von $SO_2$ zu $SO_3$ enthaltend Vanadium, mindestens ein Alkalimetall und Sulfat auf einem Siliziumdioxid-Trägermaterial, wobei der Formkörper die Form eines Zylinders mit 4 hohlzylindrischen Ausbuchtungen aufweist, erhältlich durch Extrusion einer Katalysatorvorläufermasse, umfassend Vanadium, mindestens ein Alkalimetall und Sulfat auf einem Siliziumdioxid-Trägermaterial, durch die Öffnung eines Extrusionswerkzeugs, wobei die Öffnung des Extrusionswerkzeugs einen Querschnitt aufweist, der von 4 mit ihren Mittelpunkten im Wesentlichen auf einer Kreislinie mit dem Durchmesser y liegenden, sich teilweise überlagernden Kreisringen, wobei die Ringe von einem äußeren Kreis mit einem äußeren Durchmesser x1 und einem inneren Kreis mit einem inneren Durchmesser x2 begrenzt werden, wobei die Mittelpunkte der den Querschnitt bildenden Ringe ein Quadrat bilden, alle Ringe den gleichen äußeren Durchmesser x1 und die gleichen inneren Durchmesser x2 aufweisen und das Verhältnis des äußeren Durchmessers zum inneren Durchmesser der Ringe x1 : x2 von 1,5 : 1 bis 5 : 1 beträgt, gebildet wird.

**2.** Katalysatorformkörper nach Anspruch 1, **dadurch gekennzeichnet, dass** das Verhältnis des äußeren Durchmesser der Ringe zum Durchmesser der Kreislinie x1 : y von 0,8 : 1 bis 2 : 1 beträgt.

**3.** Katalysatorformkörper nach Anspruch 1 oder 2, **dadurch gekennzeichnet, dass** das Verhältnis der mittleren Länge z der Formkörper zum äußeren Durchmesser der Ringe z : x1 von 1 : 1 bis 6 : 1 beträgt.

**4.** Katalysatorformkörper nach einem der Ansprüche 1 bis 3, **dadurch gekennzeichnet, dass** äußere Kreise und innere Kreise der Ringe konzentrisch sind.

**5.** Katalysatorformkörper nach einem der Ansprüche 1 bis 4 mit einem oder mehreren der Merkmale (i) bis (iv):

(i) Durchmesser y der Kreislinie im Bereich von 4 bis 9 mm;
(ii) äußere Durchmesse x1 im Bereich von 5,5 bis 11 mm;
(iii) innere Durchmesser x2 im Bereich von 2,2 bis 7 mm;
(iv) mittlere Länge z der Formkörper im Bereich von 10 bis 35 mm.

**6.** Verfahren zur Herstellung von Katalysatorformkörpern umfassend Vanadium, mindestens ein Alkalimetall und Sulfat auf einem Silikat-Trägermaterial, aus einer Katalysatorvorläufermasse, umfassend Vanadium, mindestens ein Alkalimetall und Sulfat auf einem Silikat-Trägermaterial, durch Extrusion einer Katalysatorvorläufermasse, umfassend Vanadium, mindestens ein Alkalimetall und Sulfat auf einem Siliziumdioxid-Trägermaterial, durch die Öffnung eines Extrusionswerkzeugs, wobei die Öffnung des Extrusionswerkzeugs einen Querschnitt aufweist, der von 4 mit ihren Mittelpunkten auf einer Kreislinie mit dem Durchmesser y liegenden, sich teilweise überlagernden Kreisringen, die von einem äußeren Kreis mit einem äußeren Durchmesser x1 und einem inneren Kreis mit einem inneren Durchmesser x2 begrenzt werden, wobei die Mittelpunkte der den Querschnitt bildenden Ringe ein Quadrat bilden, alle Ringe den gleichen äußeren Durchmesser x1 und die gleichen inneren Durchmesser x2 aufweisen und das Verhältnis des äußeren Durchmessers zum inneren Durchmesser der Ringe x1 : x2 von 1,5 : 1 bis 5 : 1 beträgt, gebildet wird.

**7.** Verwendung der Katalysatorformkörper, wie in einem der Ansprüche 1 bis 5 definiert, zur Oxidation von $SO_2$ zu $SO_3$.

**8.** Verfahren zur Oxidation von $SO_2$ zu $SO_3$, bei dem ein Sauerstoff und Schwefeldioxid enthaltendes Gasgemisch bei einer Temperatur im Bereich von 340 bis 680 °C mit einer Schüttung aus Katalysatorformkörpern gemäß einem der Ansprüche 1 bis 5 in Kontakt gebracht wird.

**Claims**

**1.** A shaped catalyst body for the oxidation of $SO_2$ to $SO_3$, which comprises vanadium, at least one alkali metal and sulfate on a silicon dioxide support material, wherein the shaped body has the shape of a cylinder having 4 hollow-cylindrical convexities, obtainable by extrusion of a catalyst precursor composition comprising vanadium, at least one alkali metal and sulfate on a silicon dioxide support material through the opening of an extrusion tool, wherein the opening of the extrusion tool has a cross section formed by 4 partly overlapping annular rings whose midpoints lie essentially on a circular line having a diameter of y, wherein the rings are bounded by an outer circle having an external diameter x1 and an inner circle having an internal diameter x2, wherein the midpoints of the rings forming the cross section form a square, all rings have the same external diameter x1 and the same internal diameters x2 and the ratio of the external diameter to the internal diameter of the rings x1:x2 is from 1.5:1 to 5:1.

**2.** The shaped catalyst body according to claim 1, wherein the ratio of the external diameter of the rings to the diameter of the circular line x1:y is from 0.8:1 to 2:1.

**3.** The shaped catalyst body according to claim 1 or 2, wherein the ratio of the average length z of the shaped bodies to the external diameter of the rings z:x1 is from 1:1 to 6:1.

4. The shaped catalyst body according to any of claims 1 to 3, wherein outer circles and inner circles of the rings are concentric.

5. The shaped catalyst body according to any of claims 1 to 4 having one or more of the features (i) to (iv) :

    (i) diameter y of the circular line in the range from 4 to 9 mm;
    (ii) external diameter x1 in the range from 5.5 to 11 mm;
    (iii) internal diameter x2 in the range from 2.2 to 7 mm;
    (iv) average length z of the shaped bodies in the range from 10 to 35 mm.

6. A process for producing shaped catalyst bodies comprising vanadium, at least one alkali metal and sulfate on a silicate support material from a catalyst precursor composition comprising vanadium, at least one alkali metal and sulfate on a silicate support material by extrusion of a catalyst precursor composition comprising vanadium, at least one alkali metal and sulfate on a silicon dioxide support material through the opening of an extrusion tool, wherein the opening of the extrusion tool has a cross section formed by 4 partly overlapping annular rings which are bounded by an outer circle having an external diameter x1 and an inner circle having an internal diameter x2 and whose midpoints lie on a circular line having the diameter y, wherein the midpoints of the rings forming the cross section form a square, all rings have the same external diameter x1 and the same internal diameters x2 and the ratio of the external diameter to the internal diameter of the rings x1:x2 is from 1.5:1 to 5:1.

7. The use of the shaped catalyst body as defined in any of claims 1 to 5 for the oxidation of $SO_2$ to $SO_3$.

8. A process for the oxidation of $SO_2$ to $SO_3$, wherein a gas mixture comprising oxygen and sulfur dioxide is brought into contact at a temperature in the range from 340 to 680°C with a bed of shaped catalyst bodies according to any of claims 1 to 5.

**Revendications**

1. Corps moulé catalytique pour l'oxydation de $SO_2$ en $SO_3$, contenant du vanadium, au moins un métal alcalin et du sulfate sur une matière de support à base de dioxyde de silicium, le corps moulé ayant la forme d'un cylindre avec 4 renflements cylindriques creux, pouvant être obtenu par extrusion d'une masse progénitrice de catalyseur, comprenant du vanadium, au moins un métal alcalin et du sulfate sur une matière de support à base de dioxyde de silicium, à travers l'orifice d'un outil d'extrusion, l'orifice de l'outil d'extrusion présentant une section transversale qui est formée par 4 anneaux circulaires se recouvrant en partie, dont les centres se trouvent essentiellement sur une ligne circulaire ayant le diamètre y, les anneaux étant limités par un cercle externe ayant un diamètre externe x1 et un cercle interne ayant un diamètre interne x2, où les centres des anneaux formant la section transversale forment une carré, tous les anneaux présentent le même diamètre externe x1 et le même diamètre interne x2 et le rapport du diamètre externe au diamètre interne des anneaux x1 : x2 vaut de 1,5 : 1 à 5 : 1.

2. Corps moulé catalytique selon la revendication 1, **caractérisé en ce que** le rapport du diamètre externe des anneaux au diamètre de la ligne circulaire x1 : y vaut de 0,8 : 1 à 2 : 1.

3. Corps moulé catalytique selon la revendication 1 ou 2, **caractérisé en ce que** le rapport de la longueur moyenne z des corps moulés au diamètre externe des anneaux z : x1 vaut de 1 : 1 à 6 : 1.

4. Corps moulé catalytique selon l'une quelconque des revendications 1 à 3, **caractérisé en ce que** le cercle externe et le cercle interne des anneaux sont concentriques.

5. Corps moulé catalytique selon l'une quelconque des revendications 1 à 4, présentant une ou plusieurs des caractéristiques (i) à (iv) :

    (i) diamètre y de la ligne circulaire dans la plage de 4 à 9 mm ;
    (ii) diamètre externe x1 dans la plage de 5,5 à 11 mm ;
    (iii) diamètre interne x2 dans la plage de 2,2 à 7 mm ;
    (iv) longueur moyenne z des corps moulés dans la plage de 10 à 35 mm.

6. Procédé pour la fabrication de corps moulés catalytiques comprenant du vanadium, au moins un métal alcalin et du sulfate sur une matière de support à base de silicate, à partir d'une masse progénitrice de catalyseur, comprenant du vanadium, au moins un métal alcalin et du sulfate sur une matière de support à base de silicate, par extrusion d'une masse progénitrice de catalyseur, comprenant du vanadium, au moins un métal alcalin et du sulfate sur une matière de support à base de dioxyde de silicium, à travers l'orifice d'un outil d'extrusion, l'orifice de l'outil d'extrusion présentant une section transversale qui est formée par 4 anneaux circulaires se recouvrant en partie, dont les centres se trouvent sur une ligne circulaire ayant le diamètre y, qui sont limités par un cercle externe ayant un diamètre externe x1 et un cercle interne ayant un diamètre interne x2, où les centres des anneaux formant la section transversale forment une carré, tous les anneaux présentent le même diamètre externe x1 et le même diamètre interne x2 et le rapport du diamètre externe au diamètre interne des anneaux x1 : x2 vaut de 1,5 : 1 à 5 : 1.

7. Utilisation des corps moulés catalytiques, tels que définis dans l'une quelconque des revendications 1 à 5, pour l'oxydation de $SO_2$ en $SO_3$.

8. Procédé pour l'oxydation de $SO_2$ en $SO_3$, dans lequel on met en contact un mélange gazeux contenant de l'oxygène et du dioxyde de soufre, à une température dans la plage de 340 à 680 °C, avec un lit de corps moulés catalytiques selon l'une quelconque des revendications 1 à 5.

Figur 1a

Figur 1b

7,4 mm

5,6 mm

7,4 mm

5,6 mm

Figur 1c

Figur 1d

Figur 1e

Figur 2a

Figur 2b

Figur 2c

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4485190 A
- DE 68919235 T2
- EP 464633 A1
- DE 69220225 T2
- DE 69635919 T2
- US 20090306410 A1
- EP 417722 A1
- EP 0019174 A

**In der Beschreibung aufgeführte Nicht-Patentliteratur**

- *Catal. Rev.-Sci. Eng.,* 1978, vol. 17 (2), 203-272
- **H. MÜLLER.** Sulfuric Acid and Sulfur Trioxide in Ullmann'a Encyclopedia of Industrial Chemistry. Wiley-VCH, 2012